# EUROPEAN PATENT SPECIFICATION

(11) **EP 1 782 942 B1**
(45) Date of publication and mention of the grant of the patent: **04.01.2012**
(21) Application number: 06076966.8
(22) Date of filing: 01.11.2006
(51) Int. Cl.: B29C 73/10, B29C 73/34, B64F 5/00, F24J 1/00

(54) **Fast line maintenance repair method for composite structures**
Verfahren zur Reparatur und schneller Wartung für Verbundstrukturen
Méthode de réparation et de maintenance rapide pour structures composites

(30) Priority: 02.11.2005 US 163872
(43) Date of publication of application: 09.05.2007
(73) Proprietor: The Boeing Company, Chicago IL 66066-2016 (US)
(72) Inventor: Keller, Russell L., Maple Valley, WA 98038 (US); Spalding, John F., Renton WA 98055 (US); Blanchard, Steven D., Issaquah, WA 98027 (US)
(74) Representative: Land, Addick Adrianus Gosling

(56) References cited:
- US-A1- 4 560 428
- US-A1- 5 442 156
- US-A1- 5 865 397
- US-B1- 6 652 690

## Description

### Field of the Invention

The present invention relates to methods for repairing structures comprised of composite materials according to claim 1, and in particular, to methods for effecting such repairs with limited resources and time.

### Background Information

The use of structures comprised of composite materials has grown in popularity, particularly in such applications as aircraft airframes, where benefits include increased strength and rigidity, reduced weight and reduced parts count. When damaged, however, composite structures often require extensive repair work which may ground an aircraft, thereby adding significantly to the support costs of the aircraft. Current maintenance procedures frequently require that the damaged component be removed and replaced before the aircraft can resume flying.

Commercial airlines today do not have the ability to repair structural damage to an aircraft's composite structures without severely delaying or canceling the aircraft's next flight. Short domestic flights may have only 30-60 minutes of time at the gate whereas longer and international flights may have 60-90 minutes. The Commercial Airline Composite Repair Committee (CACRC), an international consortium of airlines, OEMs, and suppliers, reports, however, that the average composite repair permitted in the Structural Repair Manuals (SRMs) takes approximately 15 hours to complete. In most cases, flight cancellations occur when a composite repair is performed at the flight line. Removing an airplane from revenue service in order to repair a damaged composite structure not only costs the operator the labor to repair the structure and adjust its flight schedules, it also causes passenger dissatisfaction.

In addition to the long time required, repairs to composite structures require special skills and equipment in order to properly carry out the repair. Currently, line mechanics do not generally have the training and experience to perform composite repairs, requiring airlines to call out their composite repair technicians from the back shops or heavy maintenance organizations to perform the repairs. These technicians are often located some distance from the airport gate.

Moreover, in conjunction with the lack of training by line mechanics in repairing structural damage, there are restrictions on what equipment and tools are permitted or available at the flight line. This limits the scope of repairs that can be done at the gate. Standard procedures for repairing composite structures require special tools, equipment, and consumable materials. This may include tools for cutting, grinding and drilling; non-destructive inspection equipment; rulers, guides, and templates; electrical heating and vacuum sources and controllers; and an array of vacuum bagging materials. In many situations, the standard hot bonding equipment required for bonded composite repairs is not allowed at the gate due to the potentially explosive conditions that may be present there.

US-A-4,560,428 discloses a method of repairing an aircraft composite structure, comprising the steps of: preparing an area of the structures surrounding a damaged area; applying an adhesive to at least a portion of the prepared area; placing a repair patch over the adhesive; and placing a caul plate over the repair patch.

The present invention has for its object to improve upon the prior art, especially to provide a method which is suitable for repairing a commercial aircraft at the gate or flight line.

The present invention provides a method of repairing an aircraft composite structure at a gate or flight line comprising the steps of: preparing an area of the structure surrounding a damaged area; applying an adhesive to at least a portion of the prepared area; placing a repair patch on the adhesive; placing a caul plate over the repair patch; placing a chemical heat pack over the caul plate; applying compaction to the chemical heat pack; waiting for a cure period to elapse; wherein the cure period does not exceed approximately one hour; removing the compaction, the chemical heat pack and the caul plate; and applying a protective member over the repair patch.

As such, a chemical heat pack is known from US-B-6,652,690 for use in the field of repairing pipes.

Further US-A-5,865,397 discloses an aircraft surface for use on composite structure including a conductive foil, a conductive double pulled expanded screen, and an adhesive for joining the conductive foil and screen to a composite material.

### Summary of the Invention

In an exemplary embodiment, the present invention provides a repair method and system that allows a composite structure to be repaired quickly, with minimal skill, and with minimal tools or equipment. In an exemplary embodiment, a pre-cured patch material is bonded onto the damaged structure using a quick-curing paste adhesive. An exothermic chemical heat pack is used to provide heat for curing of the adhesive. The chemical heat pack is a reliable and self-regulating heat source that does not require monitoring devices such as thermocouples. Moreover, the temperature generated by the chemical heat packs is preferably less than 200 degrees F so that the damaged structure does not have to be dried out to remove any moisture present. The temperature generated by the chemical heat packs is low enough such that the repair can be performed in a hazardous environment, such as in a fuel cell repair, with no explosion risk.

The repair can be carried out without electrical heating and with or without vacuum equipment. Moreover, the repair does not require that the damage in the composite structure be shaped, such as by grinding or sanding, so that it has a standard geometric shape, such as an oval or circle.

Preferably, all of the materials and tools required for the repair can be provided in a self-contained repair kit that can be stored on the aircraft or at a typical airport gate.

An advantage of the repair method and system of the present invention is that it provides aircraft operators with the ability to repair damage to composite structures while the aircraft is at the gate and without impacting the aircraft's flight schedule. The exemplary repair can be performed, for example, by a line mechanic at the gate or flight line in approximately 60 minutes or less. This results in a lower overall life cycle cost of the aircraft, increased revenue, and improved dispatch reliability.

These and other features and advantages of the present invention will become apparent from the following description.

### Brief Description of the Drawings

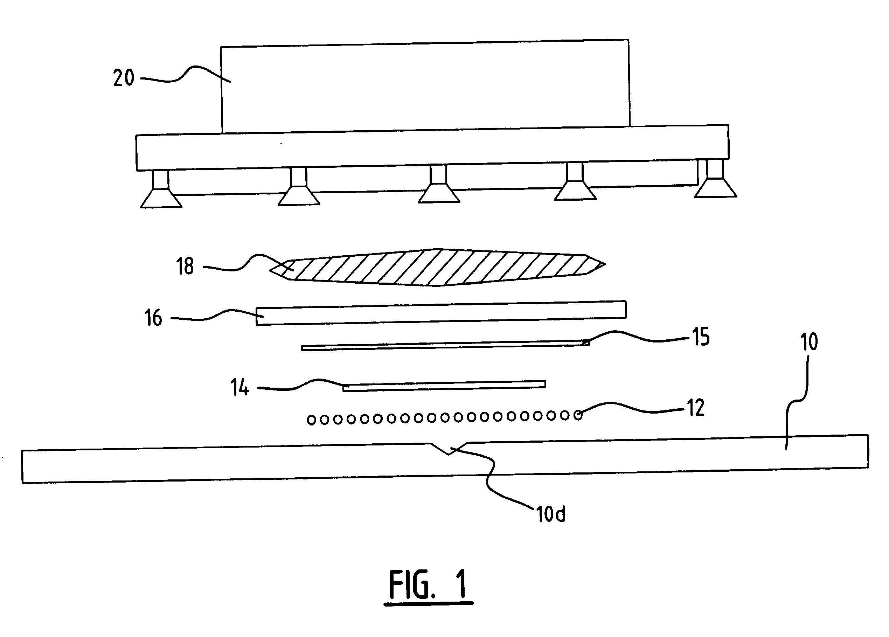

FIG. 1 shows an exploded view of materials and tools applied to repair a composite structure in accordance with an exemplary embodiment of the present invention.

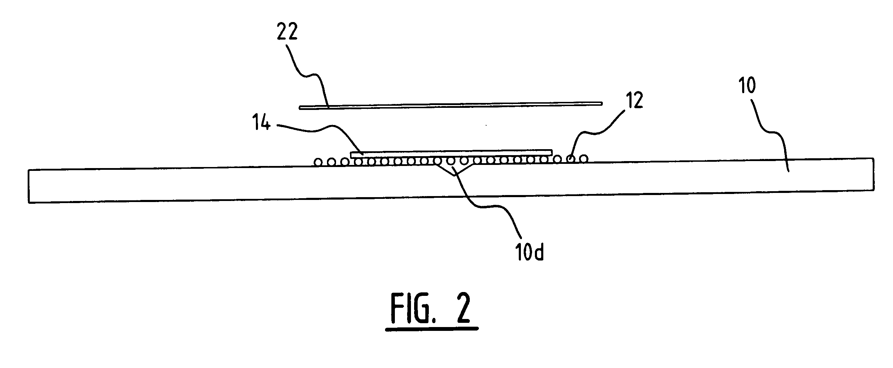

FIG. 2 shows the application of a paint replacement film over a repair carried out in accordance with an exemplary embodiment of the present invention.

### Detailed Description

An exemplary embodiment of a repair method of the present invention begins with the preparation of the damaged structure 10. Any material protruding from the damage site 10d is removed and a bonding surface surrounding the damage site is prepared by removing any paint or covering on the bonding surface such as by sanding. The sanding should not go into the fibers of the composite. The bonding surface is then abraded to remove any glossy areas remaining and cleaned.

An adhesive 12 is applied to the bonding surface of the damaged structure. Care should be taken to ensure adequate bondline thickness control. A notched trowel or the like can be used for this purpose. Such a tool can be provided as part of a kit for carrying out such repairs. The adhesive 12 can be of a type that cures at ambient or elevated temperatures. Preferably, the adhesive 12 multi-component paste adhesive that has a short working life and can quickly cure when a low temperature heat is applied. Such adhesives have not typically been used for structural repairs and typically cure at ambient temperatures. By curing the adhesive at an elevated temperature, the desired strength and stiffness is achieved. The adhesive 12 can be supplied as part of the aforementioned repair kit in a multi-compartment pouch that has a frangible seal between the compartments. To mix, the frangible seal is broken and the pouch of adhesive is thoroughly mixed by kneading the material together until a consistent color is achieved. The mixing preferably occurs within the pouch which is at least partially transparent to allow the user to see the color of the adhesive. Once a consistent color is achieved, the pouch can be opened and the adhesive released for application.

The adhesive 12 is also preferably applied to the bonding surface of a patch 14 that is placed on the layer of adhesive that was applied to the bonding surface of the damaged structure. The adhesive 12 can be applied to the patch 14 using, for example, the aforementioned notched trowel to ensure bondline thickness control. In an exemplary embodiment, the patch 14 comprises a 4-ply pre-fabricated material made from either a fiberglass fabric prepreg, for repair of fiberglass-skinned components, or from a carbon/epoxy fabric prepreg, for repair of carbon-skinned components. The patch 14 is autoclave-cured, pre-cut to a standard size and shape, pre-sanded and then sealed in a pouch which can be stored as part of the aforementioned repair kit. The patch 14 may be provided with a slight curvature to enable it to contour to certain structures that have curvatures greater than the normal flexibility of the 4-ply patch. The patch 14 can preferably be trimmed to a desired shape and size to best match the repair site. Furthermore, patches with different stiffnesses can be provided by changing the ply orientation sequence (e.g., 0/45/45/0 vs. 45/0/0/45) in the patch. In addition, for deeper damages on thick structures, stacks of multiple (e.g, up to three) layers of patch material, with adhesive applied in between the layers, can be installed to achieve greater patch strength and stiffness. A longer cure time will typically be required when more than two patch layers are used, as the heat will be lower on the lower patch layer(s).

During the bonding process, the patch 14 is placed over the adhesive 12 on the structure 10. A release film 15 is then placed over the patch 14, followed by a caul plate 16. The release film 15 acts to prevent the adhesive 12 from sticking to the caul plate 16 and provides a smooth outer surface. The release film 15 may be comprised of, for example, a fluorinated ethylene propylene or equivalent. The caul plate 16 is preferably flexible and able to conduct heat and may be comprised of, for example, copper or aluminum with a thickness of 0.020-0.030". A chemical heat pack 18 is then activated and placed over the caul plate 16. Unlike heat sources conventionally used for this purpose, the chemical heat pack 18 does not require power, thermocouples, or a heat controller.

A variety of off-the-shelf chemical heat packs can be used with the present invention. Such heat packs can typically survive vacuum compaction and have a "gel like" consistency when activated/mixed. The gelling of the heating medium allows the heat pack to be deployed in any orientation without adversely affecting the heat transfer. This allows the heat source to perform equally well in horizontal, vertical and inverted repair applications.

A sodium-acetate heat pad can provide a reliable, repeatable, and uniform heat source for 30-60 minutes at 120-130°F. For higher temperatures, a potassium permanganate heat pack can be used, for example, such as is available from Tempra Technologies Inc. of Bradenton, FL and described in U.S. Patent No. 5,035,230. A heat pack that provides a reliable heat source of approximately 140-160°F over approximately 35 minutes is preferred.

In a further exemplary embodiment, a temperature indicating means, such as a temperature indicator strip or the like, can be used to determine the temperature of the heat pack and/or of the repair area. A temperature indicator strip or the like may be provided on the heat pack 18 and/or separately. Such a feature helps to ensure that the desired temperature is achieved for the desired period of time.

Compaction of the patch onto the structure can be accomplished in several ways. One method is to manually apply pressure during the cure time (e.g., 35 minutes). Another method is to apply a compaction tool 20, such as a vacuum bag, over the repair. The vacuum bag can be provided as part of the repair kit or it can be assembled from parts and materials included in the repair kit. An exemplary vacuum bag is described more fully below. The vacuum can be applied using a facility vacuum source, or in conjunction with a venturi device, a compressed nitrogen or air source, such as nitrogen bottles used to inflate aircraft tires. (The venturi creates a vacuum as the compressed gas flows past the orifice in the venturi.) The vacuum bag provides pressure to achieve greater uniformity and consistency in the bondline than positive pressure. It also can aid in more uniform heating.

Once the cure time of the adhesive 12 has elapsed, the compaction tool 20, heat pack 18, caul plate 16, and separator film 15 are removed. A paint replacement film 22 can then be applied to cover and protect the repair from contaminants. The film 22 minimizes the exposure of the repair to common aviation solvents and weathering. The film 22 may also provide lightning strike protection. Alternately or in addition to, lightning strike protection can be incorporated into the repair patch 14. The lightning strike protection can be provided by embedding in the top layer of the patch 14 a lightning strike protection element, such as an expanded foil or interwoven wire, or the paint replacement film 22 can be made conductive.

The various materials and tools used to carry out a repair in accordance with the present invention can preferably be contained in a portable repair kit that can be stored, for example, in an aircraft, at a typical airport gate, or in a maintenance service cart. An exemplary kit may contain, for example, the repair patch, adhesive, paint restoration film, heat pad, adhesive spreader, pre-saturated solvent wipes, scissors, ruler/beam compass, separator film, lint free wipes, abrasive paper, sanding pad, template film, nylon film, positioning tape, latex gloves, scissors, and a razor blade.

It is understood that the above-described embodiments are illustrative of only a few of the possible specific embodiments which can represent applications of the invention. Numerous and varied other arrangements can be made by those skilled in the art without departing from the scope of the invention.

## Claims

1. A method of repairing an aircraft composite structure (10) at a gate or flight line comprising the steps of:
preparing an area of the structure (10) surrounding a damaged area (10d);
applying an adhesive (12) to at least a portion of the prepared area;
placing a repair patch (14) on the adhesive (12);
placing a caul plate (16) over the repair patch (14);
placing a chemical heat pack (18) over the caul plate (16);
applying compaction to the chemical heat pack (18);
waiting for a cure period to elapse;
wherein the cure period does not exceed approximately one hour;
removing the compaction, the chemical heat pack (18) and the caul plate (16); and
applying a protective member (22) over the repair patch (14).

2. The method of claim 1, comprising applying the adhesive (12) to the repair patch (14) before placing the repair patch.

3. The method of claim 1 or 2, comprising trimming the repair patch (14) before placing the repair patch.

4. The method of claim 1, 2 or 3, comprising placing a plurality of repair patches (14) and applying the adhesive between the repair patches (14).

5. The method of any of claims 1-4, comprising placing a release film (15) over the repair patch (14) before placing the caul plate (16).

6. The method of any of claims 1-5, wherein the structure comprises a composite material.

7. The method of any of claims 1-6, wherein the repair patch (14) includes a pre-cured patch.

8. The method of any of claims 1-7, wherein the repair patch (14) comprises a multiple-ply fabric material.

9. The method of claim 8, wherein the multiple-ply fabric material comprises a fiberglass fabric prepreg.

10. The method of claim 8 or 9, wherein the multiple-ply fabric material comprises a carbon/epoxy fabric prepreg.

11. The method of any of claims 1-10, wherein the step of applying compaction includes applying a vacuum bag on the prepared area.

12. The method of any of claims 1-11, wherein the repair patch (14) includes lightning protection.

13. The method of any of claims 1-12, wherein a temperature attained by the chemical heat pack does not exceed approximately 90°C (200°F).

14. The method of any of claims 1-13, wherein the protective member (22) includes a paint replacement film.

15. The method of any of claims 1-14, wherein the protective member (22) includes lightning protection.

## Patentansprüche

1. Verfahren zur Reparatur einer Luftfahrzeugverbundstruktur (10) an einem Flugsteig oder einer Fluglinie, welches die Schritte umfasst:
Präparieren eines Bereichs der Struktur (10), welcher einen beschädigten Bereich (10d) umgibt;
Aufbringen eines Adhäsionsmittels (12) auf zumindest einen Abschnitt des präparierten Bereichs;
Platzieren eines Ausbesserungsstücks (14) auf dem Adhäsionsmittel (12);
Platzieren einer Pressplatte (16) über dem Ausbesserungsstück (14);
Platzieren einer chemischen Wärmepackung (18) über der Pressplatte (16);
Anwenden von Kompaktierung auf die chemische Wärmepackung (18);
Warten auf das Verstreichen eines Aushärtungszeitraums;
wobei der Aushärtungszeitraum annähernd eine Stunde nicht überschreitet;
Wegnehmen der Kompaktierung, der chemischen Wärmepackung (18) und der Pressplatte (16); und
Anbringen eines Schutzelements (22) über dem Ausbesserungsstück (14)

2. Verfahren nach Anspruch 1, welches das Aufbringen des Adhäsionsmittels (12) auf das Ausbesserungsstück (14) vor dem Platzieren des Ausbesserungsstücks umfasst.

3. Verfahren nach Anspruch 1 oder 2, welches das Zurechtschneiden bzw. Anpassen des Ausbesserungsstücks (14) vor dem Platzieren des Ausbesserungsstücks umfasst.

4. Verfahren nach Anspruch 1, 2 oder 3, welches das Platzieren einer Mehrzahl von Ausbesserungsstücken (14) und das Anwenden des Adhäsionsmittels zwischen den Ausbesserungsstücken (14) umfasst.

5. Verfahren nach einem der Ansprüche 1 - 4, welches das Platzieren eines Trennfilms bzw. einer Trennfolie (15) über dem Ausbesserungsstück (14) vor dem Platzieren der Pressplatte (16) umfasst.

6. Verfahren nach einem der Ansprüche 1 - 5, wobei die Struktur ein Verbundmaterial umfasst.

7. Verfahren nach einem der Ansprüche 1 - 6, wobei das Ausbesserungsstück (14) ein vor-ausgehärtetes Ausbesserungsstück einschließt.

8. Verfahren nach einem der Ansprüche 1 - 7, wobei das Ausbesserungsstück (14) ein mehrlagiges Gewebematerial umfasst.

9. Verfahren nach Anspruch 8, wobei das mehrlagige Gewebematerial ein Glasfasergewebeprepreg umfasst.

10. Verfahren nach Anspruch 8 oder 9, wobei das mehrlagige Gewebematerial ein Kohlenstoff/Epoxid-Gewebeprepreg umfasst.

11. Verfahren nach einem der Ansprüche 1 - 10, wobei der Schritt des Anwendens von Kompaktierung das Anwenden eines Vakuumsacks auf dem präparierten Bereich einschließt.

12. Verfahren nach einem der Ansprüche 1 - 11, wobei das Ausbesserungsstück (14) Blitzschutz beinhaltet.

13. Verfahren nach einem der Ansprüche 1 - 12, wobei eine von der chemischen Wärmepackung erreichte Temperatur annähernd 90 °C (200 °F) nicht überschreitet.

14. Verfahren nach einem der Ansprüche 1 - 13, wobei das Schutzelement (22) einen Lack- bzw. Farbersatzfilm bzw. eine Lack- bzw. Farbersatzfolie einschließt.

15. Verfahren nach einem der Ansprüche 1 - 14, wobei das Schutzelement (22) Blitzschutz beinhaltet.

## Revendications

1. Procédé de réparation de la structure composite (10) d'un avion à la porte d'embarquement ou sur la piste, comprenant les étapes consistant à :
préparer une zone de la structure (10) entourant une zone endommagée (10d) ;
appliquer un adhésif (12) sur au moins une partie de la zone préparée ;
placer une plaquette de réparation (14) sur l'adhésif (12) ;
placer une plaque de presse (16) sur la plaquette de réparation (14) ;
placer une garniture chauffante par voie chimique (18) sur la plaque de presse (16) ; et
appliquer une compression sur la garniture chauffante par voie chimique (18) ;
laisser s'écouler une période de durcissement ;
la période de durcissement ne dépassant pas une heure environ ;
enlever la compression, la garniture chauffante par voie chimique (19) et la plaque de presse (16) ; et
appliquer un élément protecteur (22) sur la plaquette de réparation (14).

2. Procédé selon la revendication 1, comprenant l'application de l'adhésif (12) sur la plaquette de réparation (14) avant la mise en place de la plaquette de réparation.

3. Procédé selon la revendication 1 ou 2, comprenant la retaille de la plaquette de réparation (14) avant la mise en place de la plaquette de réparation.

4. Procédé selon la revendication 1, 2 ou 3, comprenant la mise en place d'une pluralité de plaquettes de réparation (14) et l'application de l'adhésif entre les plaquettes de réparation (14).

5. Procédé selon l'une quelconque des revendications 1 à 4, comprenant la mise en place d'une pellicule anti-adhésive (15) sur la plaquette de réparation (14) avant la mise en place de la plaque de presse (16).

6. Procédé selon l'une quelconque des revendications 1 à 5, dans lequel la structure comprend un matériau composite.

7. Procédé selon l'une quelconque des revendications 1 à 6, dans lequel la plaquette de réparation (14) comprend une plaquette à pré-durcissement.

8. Procédé selon l'une quelconque des revendications 1 à 7, dans lequel la plaquette de réparation (14) comprend un matériau tissé à épaisseurs multiples.

9. Procédé selon la revendication 8, dans lequel le matériau tissé à multiples épaisseurs comprend un préimprégné tissé à base de fibres de verre.

10. Procédé selon la revendication 8 ou 9, dans lequel le matériau tissé à multiples épaisseurs comprend un préimprégné tissé à base de carbone/époxy.

11. Procédé selon l'une quelconque des revendications 1 à 10, dans lequel l'étape d'application de la compression comprend l'application, sur la zone préparée, d'un sac sous vide.

12. Procédé selon l'une quelconque des revendications 1 à 11, dans lequel la plaquette de réparation (14) comprend une protection contre la foudre.

13. Procédé selon l'une quelconque des revendications 1 à 12, dans lequel la température atteinte par la garniture chauffante par voie chimique ne dépasse pas 90 °C (200 °F) environ.

14. Procédé selon l'une quelconque des revendications 1 à 13, dans lequel l'élément protecteur (22) comprend une pellicule de remplacement de peinture.

15. Procédé selon l'une quelconque des revendications 1 à 14, dans lequel l'élément protecteur (22) comprend une protection contre la foudre.
